# EUROPÄISCHE PATENTSCHRIFT

(11) **EP 0 603 986 B1**
(45) Veröffentlichungstag und Bekanntmachung des Hinweises auf die Patenterteilung: **23.07.1997**
(21) Anmeldenummer: 93250341.0
(22) Anmeldetag: 08.12.1993
(51) Int. Cl.: B01D 53/74, B01J 35/00

(54) **Vorrichtung zur Reinigung schadstoffbeladener Abluft**
Device for cleaning exhaust air containing noxious substances
Dispositif de purification d'air d'échappement contenant des substances nocives

(30) Priorität: 14.12.1992 DE 4242618
(43) Veröffentlichungstag der Anmeldung: 29.06.1994
(73) Patentinhaber: MANNESMANN Aktiengesellschaft, 40213 Düsseldorf (DE)
(72) Erfinder: Becker, Oliver, D-66679 Losheim (DE); Hager, Herbert, D-66809 Nalbach (DE); Kolz, Sabine, D-66352 Grossrosseln (DE)
(74) Vertreter: Meissner, Peter E., Dipl.-Ing.

(56) Entgegenhaltungen:
- EP-A- 0 485 179
- DE-A- 4 106 872
- DE-A- 4 209 195
- DE-C- 4 209 198
- GB-A- 2 252 968
- US-A- 4 234 549

## Beschreibung

Die Erfindung betrifft eine Vorrichtung zur Reinigung schadstoffbeladener Abluft durch heterogene Katalyse gemäß dem Gattungsbegriff des Hauptanspruches.

Aus der DE-A-42 09 195 ist ein Katalysator aus metallischem Gewebeband bekannt, wobei zur Erhöhung der wirksamen Oberfläche des Gewebebandes auf dieses eine dünne Schicht eines Mineralkristalls aufgebracht ist. Zum Wickeln werden Abstandsmittel z.B. ein Keramikfaserband zwischengelegt.

Die katalytische Verbrennung von trägerfixierten Schadstoffen ist prinzipiell bekannt und läßt sich mit einer großen Vielfalt von Katalysatoren durchführen (DE 38 04 722). Bei den bisherigen Ausführungen wird das Katalysatormaterial auf keramische und metallische Wabenkörper und sonstige keramische Träger, z. B. Schüttung mit großer Oberfläche aufgebracht. Der Nachteil der bisher bekannten Katalyseverfahren besteht darin, daß die gesamte Trägerluft auf die Arbeitstemperatur des Katalysatormaterials (200 bis 600 Grad Celsius) erwärmt werden muß. Im Falle von Verbrennungsprozessen wie z. B. Kraftfahrzeugmotoren, hat das zu reinigende Abgas bereits selbst die erforderliche Prozeßtemperatur. Im ersteren Fall, bei dem die erforderliche Energie von außen zugeführt werden muß, bedeutet dies einen hohen Energieaufwand und schränkt den Anwendungsbereich der katalytischen Nachverbrennung ein.

Zur Überwindung dieses Problems ist bereits vorgeschlagen worden (DE 39 29 521), nur die Katoberfläche auf die erforderliche Arbeitstemperatur zu bringen, um mit einer Trägerluft von etwa Raumtemperatur arbeiten zu können. Dazu wird ein mit Katalysatormaterial beschichteter Heizdraht eingesetzt, der durch Anlegen einer elektrischen Spannung direkt beheizt wird. Die trägerfixierte Schadluft wird nun so schnell, beispielsweise durch ein enges Gitter aus Katalysatordrähten, die auf einem aus elektrisch isolierenden Werkstoff hergestellten Rahmen aufgespannt sind, geleitet, daß sich die Luft nur geringfügig erwärmt und die Schadstoffe weitgehend durch die katalytische Oxidation abgebaut werden. Nachteilig bei diesem Verfahren ist der schlechte Wirkungsgrad der Anlage, da jedes Luftmolekül mit den katalytisch beschichteten Heizdrähten in Kontakt gebracht werden muß. Dies ist aber bei einem für die Leistung der Anlage erforderlichen Durchsatz der schadstoffbeladenen Abluft praktisch nicht möglich. Das geschilderte Verfahren versagt bei Abluft mit geringer Schadstoffkonzentration insbesondere dann, wenn sie unter einen Wert von 100 mg/cbm Abluft absinkt.

Neben der unmittelbaren katalytischen Verbrennung ist auch das Verfahren der vorherigen Adsorption von Schadstoffen aus trägerfixierter Abluft mittels eines Adsorptivs, üblicherweise Aktivkohle, mit anschließender Desorption dieser Stoffe aus der Aktivkohle und der abschließenden katalytischen Oxidation bekannt (DE 40 03 668). Dadurch, daß die in der Aktivkohle adsorbierten Schadstoffe anschließend desorbiert und in einen Oxidationskatalysator überführt werden, wird die Aktivkohle immer wieder regeneriert und kann im Verfahren bleiben. Nachteilig bei diesem Verfahren ist, daß zur Regenerierung der Aktivkohle beispielsweise aufgeheiztes Inertgas durch die Aktivkohle geleitet werden muß. Anschließend muß die aufgeheizte Aktivkohle gekühlt werden, damit beim nachfolgenden Durchströmen der Abluft die Schadstoffe adsorptiv wieder an der Aktivkohle angelagert werden können.

Ein Vorrichtung zur Reinigung von Abluft ist aus der DE-PS 42 09 198 bekannt. Diese betrifft die Reinigung schadstoffbeladener Abluft durch heterogene Katalyse, bei dem die Abluft mit etwa Raumtemperatur durch Druck- oder Sogwirkung geführt an einem festen, mit Katalysatormaterial beschichteten Element vorbeiströmt. Die Schadstoffe werden adsorptiv am Element angelagert und spätestens nach Beladung des Elementes mit der theoretisch maximal möglichen Beladungskapazität durch Erwärmung des Elementes und bei Berührung mit der Kat-Oberfläche zu umweltverträglichen, gasförmigen Reaktionsprodukten oxidiert. Das Element besteht aus einem beheizbaren metallischen Gewebeband mit einer Maschenweite kleiner 1 mm und einer Drahtdicke kleiner als 0,1 mm, das eine dünne Schicht von gewachsenen Kristallen aufweist, die mit einem Katalysatormaterial überzogen sind. Die Effektivität dieses Katalysators ist unmittelbar verknüpft mit der Adsorptionsfähigkeit des verwendeten Elementes. Das vorgeschlagene metallische Gewebeband als Trägermaterial ist zwar als Heizelement gut geeignet, aber die die spezifische Oberfläche beeinflussende Maschenweite kann nicht beliebig verkleinert werden, ebenso nicht die Drahtdicke. Das Verfahren zur Erzeugung der Kristallschicht ist aufwendig und der spezifische Verbrauch an Katalysatormaterial hoch.

Aufgabe der Erfindung ist es, eine Vorrichtung zur Reinigung schadstoffbeladener Abluft anzugeben, mit der in einfacher Weise die schadstoffbeladene Abluft mit Schadstoffkonzentrationen von weniger als 100 mg/cbm mit besserem Wirkungsgrad und geringerem Energiebedarf im Vergleich zum Stand der Technik gereinigt werden kann.

Eine weitergehende Aufgabe besteht darin, daß die Vorrichtung kompakt gestaltet und in bestehende Abluftsysteme als Baukastenelement einsetzbar ist.

Diese Aufgabe wird mit den Merkmalen im kennzeichnenden Teil des Anspruches 1 gelöst. Vorteilhafte Weiterbildungen sind Bestandteil von Unteransprüchen.

Kern der Erfindung ist die Überlegung, daß bei gasförmigen Stoffgemischen mit einer geringen Schadstoffkonzentration in der Größenordnung von weniger als 100 mg/cbm Trägergas, die Schadstoffe zuerst aufkonzentriert werden müssen, um sie dann wirkungsvoll mit geringem Energieaufwand katalytisch verbrennen zu können. Die gewünschte Aufkonzentration wird dadurch erreicht, daß ein adsorptiv wirkender oxidkeramischer Werkstoff auf ein nichtmetallisches gasdurchlässiges Trägermaterial aufgebracht wird. Vorzugsweise besteht das nichtmetallische gasdurchlässige Trägermaterial aus einem Gewebe aus Keramikfasern, vergleichbar wie es für die Isolierung verwendet wird. Dieses Gewebe ist wickelbar, so daß es in einfacher Weise zusammen mit dem metallischen Gewebeband zu einem Modul geformt werden kann. Als nichtmetallisches Trägermaterial ist alternativ auch eine aufgeschäumte oder gesinterte Keramik in Form einer Platte oder einer Filterkerze denkbar. Auf das nichtmetallische gasdurchlässige Trägermaterial werden vorzugsweise adsorptiv wirkende Silizium- oder Aluminiumoxid-Verbindungen aufgebracht. Die mit dieser Technik erreichbare spezifische Oberfläche des Elementes liegt um ein Mehrfaches höher als vergleichbar ein beschichtetes metallisches Gewebeband.

Die Wirkungsweise der erfindungsgemäßen Vorrichtung kann wie folgt beschrieben werden. Die schadstoffbeladene Abluft durchströmt den Adsorptivkatalysator in 'kaltem' Zustand, d. h. bei etwa Raumtemperatur oder etwas darüber. Der Adsorptivkatalysator besteht aus verschiedenen Teilelementen, die sandwichartig miteinander verbunden sind. Ein Teilelement ist als adsorptiv wirkendes Teilelement ausgebildet und besteht aus einem nichtmetallischen gasdurchlässigen Trägermaterial, das mit einer adsorptiv wirkenden Schicht eines Stoffes überzogen ist. Das andere Teilelement ist als direkt beheizbares Teilelement ausgebildet, welches mit Katalysatormaterial überzogen ist. Verfahrensmäßig werden die Schadstoffe zuerst an dem als Adsorber ausgebildeten Teilelement adsorbiert. Die gereinigte Abluft wird an die Umgebung abgegeben, bzw. kann als Prozeßluft in einem Kreislauf gefahren werden. Nach Beladung des Adsorbers mit der theoretisch maximal möglichen Beladungskapazität erfolgt das Regenerieren durch Erwärmung dieses Teilelementes. Die dabei freiwerdenden Schadstoffe kommen mit dem auf einem weiteren Teilelement aufgebrachten Katalysatormaterial in Verbindung und werden katalytisch verbrannt. Nach dem Regenerieren und Abkühlen des Systems kann die erneute Beladung erfolgen.

Die Vorrichtung kann als Wickel-, Platten- oder Zylindermodul ausgebildet und durch Reihen- oder Parallelschaltung zu größeren Einheiten zusammengefaßt werden. Als Heizelemente sind vorzugsweise metallische Gewebebänder vorgesehen, die mit dem Adsorptiv sandwichartig verbunden sind. In einer ersten einfachen Ausführungsform ist das beheizbare Teilelement in Strömungsrichtung gesehen dem Adsorptiv nachgeschaltet. Dies hat den Zweck, damit die aus dem Adsorptiv ausgetriebenen Schadstoffe durch das beheizbare Teilelement zylangsweise geleitet und dort katalytisch verbrannt werden. Ebenso ist denkbar, daß ein weiteres Heizelement dem Adsorptivkatalysator vorgeschaltet ist. Durch das zusätzliche Heizelement wird das Element schneller erwärmt und die Desorption der angelagerten Schadstoffe kann wirkungsvoller ablaufen. Die vorgeschaltete Beheizung kann auch indirekt über Wärmtauscher oder direkt durch eine Feuerung z. B. Gasbrenner erfolgen. Für die Phase der Desorption und katalytischen Verbrennung kann zur Reduzierung der Energiekosten mit einem gedrosselten Volumenstrom gefahren werden. Als besonders günstig hat sich als beheizbares Teilelement ein metallisches Gewebeband aus vorzugsweise Cr-Ni-Stahl herausgestellt. Dieses Gewebeband ist gut verformbar und beansprucht hinsichtlich seiner Dicke nur wenig Platz, so daß der Adsorptivkatalysator kompakt gestaltet werden kann.

Es wurde schon darauf hingewiesen, daß die geringe Wärmespeicherkapazität des Sandwich-Elementes, d. h. Adsorptiv plus Heizelement ein wesentlicher Aspekt der vorgeschlagenen Vorrichtung ist. Aber auch bei einer geringen Wärmespeicherkapazität benötigt das Element eine endliche Zeit, um die erforderliche Prozeßtemperatur nach Einschalten der Beheizung zu erreichen. In dieser Phase des Erwärmens läuft der katalytische Prozeß nur unvollkommen ab, d. h. es können Zwischenprodukte entstehen, die weiterhin beispielsweise geruchsbelästigend sind. Bei geringen Anforderungen an eine solche Reinigungsanlage wird man diesen zeitlich begrenzten Ausstoß von Zwischenprodukten, die unvollkommen katalytisch verbrannt sind, in Kauf nehmen. Dies gilt teilweise auch für die Phase des Abkühlens des Adsorptivs nach Abschalten der Beheizung, bevor die adsorptive Wirkung des Elementes wieder voll einsetzt. Dies bedeutet aber nicht, daß in der Abkühlphase keine adsorptive Anlagerung möglich ist, sie findet je nach Temperatur des abkühlenden Adsorptivkatalysators und Zusammensetzung der Abluft im verminderten Umfang weiterhin statt. Den gewünschten Effekt der Beseitigung von Zwischenprodukten vor allen Dingen in der Phase des Erwärmens kann man auch dadurch erreichen, daß man am Element ein zweites adsorptiv wirkendes Teilelement anordnet, das in Strömungsrichtung gesehen am Ende liegt. Dieses Teilelement übernimmt dann die Aufgabe, die teilverbrannten Zwischenprodukte adsorptiv anzulagern, bis die katalytische Verbrennung voll einsetzt. Die Reinigung dieses Teilelementes kann separat erfolgen, da wegen der geringen Inanspruchnahme die Speicherkapazität für lange Zeiten ausreichend ist.

Trotz des nichtmetallischen Trägermaterials als als Adsorptiv ausgebildetes Teilelement ist die geringe Wärmespeicherkapazität des Elementes von Vorteil, so daß schon nach kurzer Zeit nach Einschalten der Beheizung die erforderliche Prozeßtemperatur erreicht wird. Den Zeitpunkt des Erreichens der Beladungskapazität des Adsorptivs kann man auf verschiedene Weise ermitteln. Eine Möglichkeit besteht darin, die Schadstoffkonzentration und die Menge des anfallenden zu reinigenden Stoffgemisches laufend zu messen und mit der zuvor rechnerisch oder durch Versuche ermittelten Beladungskapazität in Beziehung zu setzen. Unter Berücksichtigung eines festgelegten Sicherheitsabstandes wird aus diesem Verhältnis ein Steuersignal für das Einschalten der Beheizung der beheizbaren Teilelemente gebildet. Nach Ablauf einer festgelegten Abbrennzeit wird die Beheizung wieder abgeschaltet. Bei Schadstoffanfall mit relativ konstanten Werten hinsichtlich Menge und Konzentration kann der Beladungszeitraum auch rechnerisch ermittelt und die Beheizung zeitgetaktet eingestellt werden.

Für eine wirkungsvolle katalytische Oxidation ist es erforderlich, daß das Heizelement durch die Beheizung auf die auf den Schadstofftyp abgestimmte Prozeßtemperatur erwärmt wird. Um diese genau zu erfassen, wird ein Temperaturfühler, z.B. Thermoelement am Heizelement befestigt und die Meßsignale einem Regelkreis für die Beheizung zugeführt. Die Befestigung des Thermoelementes erfolgt im Falle eines metallischen Heizelementes vorzugsweise mittels Laserschweißen, da bei vielen anderen Techniken die dünnen Drähte des Gewebebandes bzw. die Heizdrähte zerstört werden.

Einsetzbar ist die Vorrichtung auch für die Reinigung von Gasen (Stickstoff, Wasserstoff, sauerstoffreie Edelgase) und für die selektive Adsorption. Im letzteren Falle können durch eine definierte Porengröße des auf dem Trägermaterial abgeschiedenen adsorptiv wirkenden Stoffes Einzelstoffe aus einem Stoffgemisch abgeschieden werden. Die generell kleine Porengröße erlaubt es auch, nicht nur die groß molekularartigen Kohlenwasserstoffe, sondern auch kleine Moleküle wie z. B. Co anzulagern. Neben dem bekannten Platin-Palladium als Katalysatormaterial können auch andere Metalle bzw. Metalloxide aufgebracht werden, so daß das Verfahren auch für die Reduktion anwendbar ist. Für das Einsatzgebiet der Lufttrocknung und Gastrockung ist kein Katalysatormaterial erforderlich, das es hier nur auf die adsorptive Anlagerung ankommt.

In der Zeichnung wird der erfindungsgemäße Adsorptivkatalysator näher erläutert.

Es zeigt:

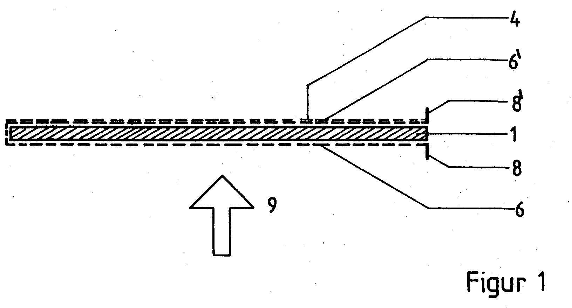

- Figur 1: einen Schnitt durch ein Sandwich-Element

Figur 1 zeigt den sandwichartigen Aufbau eines Adsorptivkatalysators in Form eines Plattenmoduls, bestehend aus in Strömungsrichtung 9 gesehen einem vorgeschalteten beheizbaren metallischen Gewebeband 6, das im Regelfall nicht mit Katalysatormaterial beschichtet ist, sondern für die Regenerierphase nur die Funktion der indirekten Aufheizung des Adsorptivs 1 übernimmt. Dem Adsorptiv 1 nachgeschaltet ist ein weiteres beheizbares metallisches Gewebeband 6', das mit Katalysatormaterial 4 beschichtet ist und die Funktion des Katalysators für die katalytische Verbrennung der zuvor am Adsorptiv 1 angelagerten Schadstoffe übernimmt. Zur Verdeutlichung der Beheizbarkeit der metallischen Gewebebänder 6, 6' sind rechts im Bild skizzenhaft elektrische Kontakte 8,8' angedeutet. Für diesen Sandwich-Aufbau ist die Art der Beschichtung des Trägermaterials ohne Belang. Aus Vereinfachungsgründen wurde das das Element umgebende Gehäuse hier weggelassen. Das aus den genannten drei Teilelementen 6, 1, 6' bestehende erfindungsgemäße Element kann bezüglich seiner Beschichtung und der Aufbringung von Katalysatormaterial in verschiedenster Art und Weise behandelt werden. Beispielsweise kann jedes Teilement, 6, 1, 6' separat für sich behandelt und dann miteinander verbunden werden. Alternativ ist es auch möglich, das zuvor gefertigte Element mit Ausnahme des Katalysatormaterials 4 einheitlich zu beschichten. Beim Katalysatormaterial 4 wird man die Einzelbehandlung vorziehen, da es sich um teures Material handelt, so daß es zweckmäßig ist, die Beschichtung auf die notwendigen Bereiche zu beschränken.

Möglich ist eine Variante der Anordnung des Sandwich-Elementes. In diesem Beispiel ist das Element mäanderförmig gefaltet. Das Gehäuse, das das Sandwich-Element umschließt, ist kastenförmig ausgebildet und deshalb wird dieses Modul auch als Kanalmodul bezeichnet. Je nach Anordnung der Öffnung am Gehäuse kann die Abluft das Element in Richtung der Falten, oder quer dazu durchströmen. Die Enden des metallischen Gewebebandes des Sandwich-Elementes sind mit elektrischen Anschlüssen verbunden, die die Verbindung zur elektrischen Beheizung (hier nicht dargestellt) herstellen. Damit die Abluft nicht im Randbereich ohne wirksame Reinigung vorbeiströmen kann, ist zwischen dem gefalteten Sandwich-Element und dem Gehäuse eine Dichtung angeordnet.

Schließlich ist noch eine weitere Ausführungsform eines erfindungsgemäßen Elementes möglich. Das Sandwich-Element wird zylindrisch um einen perforierten Rohrabschnitt gewickelt. Die axiale Erstreckung des Sandwich-Elementes wird durch zwei Platten begrenzt, die auch die erforderliche Haltevorrichtung für das Sandwich-Element darstellen. Das schadstoffbeladene Stoffgemisch strömt von oben in das stehend angeordnete Zylindermodul in den Ringraum ein, der gebildet wird durch das Gehäuse und dem im Abstand dazu angeordneten Sandwich-Element. Von diesem Ringraum strömt das schadstoffbeladene Stoffgemisch, in etwa radial von außen nach innen durch das Sandwich-Element und dabei gleichzeitig in Richtung der Strömung von oben nach unten. Der Austritt des gereinigten Stoffgemisches erfolgt im perforierten Rohrabschnitt, wo sie durch eine im zweiten Halteblech angeordnete kreisförmige Öffnung aus dem Modul abströmen kann. Es bedarf keiner näheren Erläuterung, daß die Durchströmung des Sandwich-Elementes auch in umgekehrter Reihenfolge, d. h. von innen nach außen erfolgen kann.

Diese zylindrische Anordnung kann man auch in der Weise realisieren, wenn man als Trägermaterial ein hochporöses Keramikrohr verwendet und auf diesem innen und außen ein beheizbares metallisches Gewebeband anordnet. Je nach Anströmrichtung, d.h. ob von außen nach innen oder umgekehrt, ist das innenliegende oder das außenliegende beheizbare Gewebeband mit Katalysatormaterial beschichtet. Eine direkte Beheizung des Keramikrohres ist möglich, wenn es z.B. als Halbleiter wie beispielsweise Siliziumkarbid ausgebildet ist.

## Patentansprüche

1. Vorrichtung zur Reinigung schadstoffbeladener Abluft durch heterogene Katalyse mit einem in einem Gehäuse angeordneten Adsorptiv und Katalysator, denen durch im Gehäuse angeordnete Öffnungen die zu reinigenden Stoffgemische zuführbar bzw. die gasförmigen Reaktionsprodukte abführbar sind,
dadurch gekennzeichnet,
daß das Adsorptiv als Teilelement (1), bestehend aus einem nichtmetallischen gasdurchlässigen Trägermaterial, das mit einer adsorptiv wirkenden Schicht einer Silizium- oder Aluminiumverbindung überzogen ist und der Katalysator als mindestens ein metallisches, direkt beheizbares und mit Katalysatormaterial (4) überzogenes Teilelement (6,6') ausgebildet ist, wobei der Katalysator sandwichartig mit dem Adsorptiv (1) verbunden und in Strömungsrichtung gesehen dem Adsorptiv (1) nachgeschaltet ist.

2. Vorrichtung nach Anspruch 1,
**dadurch gekennzeichnet,**
daß zwei sandwichartig mit dem Adsorptiv (1) verbundene metallische direkt beheizbare Teilelemente (6,6') vorgesehen sind, die in Strömungsrichtung gesehen dem Adsorptiv (1) vor- und nachgeschaltet sind, wobei mindestens das nachgeschaltete Teilelement (6') mit Katalysatormaterial (4) überzogen ist.

3. Vorrichtung nach den Ansprüchen 1 und 2,
**dadurch gekennzeichnet,**
daß als beheizbares Teilelement (6,6') ein metallisches Gewebeband aus einem hochtemperaturbeständigen Werkstoff, insbesondere Cr-Ni-Stahl, verwendet wird.

4. Vorrichtung nach den Ansprüchen 1 bis 3,
**dadurch gekennzeichnet,**
daß das Trägermaterial ein wickelbares Gewebe aus Keramikfasern ist.

5. Vorrichtung nach den Ansprüchen 1 bis 3,
**dadurch gekennzeichnet,**
daß das Trägermaterial ein steifer hochporöser Keramikkörper ist.

6. Vorrichtung nach einem der vorhergehenden Ansprüchen 1 bis 5,
**dadurch gekennzeichnet,**
daß das Element ein zweites adsorptiv wirkendes Teilelement aufweist, das in Strömungsrichtung gesehen, am Ende angeordnet ist.

## Claims

1. Device for the purification of exhaust gas containing contaminants by heterogeneous catalysis using an adsorbant and a catalyst arranged in a housing, wherein the mixture of substances to be purified is introduced into the housing and the gaseous reaction products are removed from the housing through openings provided in the housing, characterised in that, the adsorbant is designed as a part-element (1) consisting of a non-metallic gas-permeable support material which is coated with an adsorbing layer of a silicon compound or an aluminium compound, and the catalyst is designed as at least one metallic directly-heatable part-element (6,6') coated with catalyst material (4), whereby the catalyst is fixed to the adsorbant (1) in sandwich form and is located downstream in the flow direction relative to the adsorbant (1).

2. Device in accordance with Claim 1, characterised in that, two metallic directly-heatable part-elements (6, 6') fixed in sandwich form to the adsorbant (1) are provided, which are located upstream and downstream in the flow direction relative to the adsorbant (1), whereby at least the downstream part-element (6') is coated with catalyst material (4).

3. Device in accordance with Claims 1 and 2, characterised in that, a metallic woven tape consisting of a material resistant to high temperature, in particular Cr-Ni-steel, is used as the heatable part-elements (6, 6').

4. Device in accordance with Claims 1 to 3, characterised in that, the support material is a flexible woven fabric of ceramic fibres.

5. Device in accordance with Claims 1 to 3, characterised in that, the support material is a stiff highly-porous ceramic body.

6. Device in accordance with one of the preceding Claims 1 to 5, characterised in that, the element has a second adsorbing part-element which is located at the end when seen in the direction of flow.

## Revendications

1. Dispositif pour nettoyer de l'air d'évacuation chargé de substances nocives, par une catalyse hétérogène, comportant un corps adsorbé agencé dans un boîtier et un catalyseur, par des ouvertures pratiquées dans le boîtier des mélanges de substances à nettoyer pouvant leur être amenés et les produits de réaction gazeux pouvant être évacués,
caractérisé en ce que le corps adsorbé est formé comme élément partiel (1) constitué d'un matériau porteur non métallique, perméable au gaz, et recouvert par une couche d'un composé de silicium ou d'aluminium qui agit de façon adsorptive, et le catalyseur est réalisé sous forme d'au moins un élément partiel (6,6') métallique, pouvant être chauffé directement et recouvert de matériau catalyseur (4), le catalyseur étant relié sous forme de sandwich au corps adsorbé (1) et étant agencé en aval du corps adsorbé (1) dans le sens d'écoulement.

2. Dispositif selon la revendication 1,
caractérisé en ce que l'on prévoit deux éléments partiels (6,6') reliés au corps adsorbé (1) sous forme de sandwich, métalliques, pouvant être chauffés directement et agencés en amont et en aval du corps adsorbé respectivement, dans le sens d'écoulement, au moins l'élément partiel (6') monté en aval étant recouvert de matériau catalyseur (4).

3. Dispositif selon les revendications 1 et 2,
caractérisé en ce que l'on utilise comme élément partiel (6,6') pouvant être chauffé, un ruban métallique, en un matériau résistant à des températures élevées, en particulier de l'acier Cr-Ni.

4. Dispositif selon l'une des revendications 1 à 3,
caractérisé en ce que le matériau porteur est un ruban pouvant être enroulé, en fibres céramiques.

5. Dispositif selon l'une des revendications 1 à 3,
caractérisé en ce que le matériau porteur est un corps en céramique, rigide et présentant une porosité élevée.

6. Dispositif selon l'une des revendications précédentes 1 à 5,
caractérisé en ce que l'élément comporte un second élément partiel agissant de façon adsorptive et agencé à l'extrémité dans le sens d'écoulement.
